# EUROPEAN PATENT APPLICATION

(11) **EP 4 142 119 A1**
(43) Date of publication of application: **01.03.2023**
(21) Application number: 22192862.5
(22) Date of filing: 30.08.2022
(51) Int. Cl.: H02K 5/20, H02K 9/197, H02K 1/16, H02K 1/20

(54) **ELECTRIC MOTOR**

(30) Priority: 30.08.2021 JP 2021140480
(71) Applicant: Yamaha Hatsudoki Kabushiki Kaisha, Iwata-shi, Shizuoka 438-8501 (JP)
(72) Inventor: Ito, Jin, Iwata-shi, Shizuoka (JP)
(74) Representative: Grünecker Patent- und Rechtsanwälte PartG mbB

(57) **Abstract**

An electric motor (1) includes a cylindrical housing (2) that houses a stator and a rotor. The housing (2) includes a cooling liquid channel (25) to allow a cooling liquid to flow between a first cooling liquid port (23) and a second cooling liquid port (24). The cooling liquid channel (25) includes a first annular channel (Q1) and a second annular channel (Q2) which respectively include a pair of coil ends (31b, 31c) therein, a first communication channel (61), and a second communication channel (62). A first end portion (61a) of the first communication channel (61) is located adjacent to but separated from the first annular channel (Q1) and communicates with the first cooling liquid port (23). A second end portion (61b) of the first communication channel (61) communicates with the second annular channel (Q2). The second communication channel (62) extends between the first and second annular channels (Q1, Q2) so as to communicate the first and second annular channels (Q1, Q2) with each other.

## Description

The present invention relates to an electric motor.

The rotating electric machine disclosed in JP 2019-68705 A includes a holder fixed to an inner peripheral surface of a case (housing). An inner peripheral surface of the holder is fitted to an outer peripheral surface of a stator core. Between a concavity formed on the inner peripheral surface of the holder and a concavity formed on the outer peripheral surface of the stator core, a coolant passage is formed. A coolant is made to flow through the coolant passage, and the stator core is cooled.

In the rotating electric machine disclosed in JP 2019-68705 A, the holder that is a separate member from the housing and stator core is interposed between these members to form the coolant passage. Accordingly, the structure becomes complex.

It is the object of the present invention to provide an electric motor that achieve excellent cooling performance with a simple structure.

According to the present invention said object is solved by an electric motor having the features of independent claim 1.

Preferred embodiments are laid down in the dependent claims.

A preferred embodiment provides an electric motor including a stator including a stator core and a coil, a rotor, and a cylindrical housing to house the stator and the rotor. The stator core includes a plurality of teeth extending in an axial direction along a rotational axis and annularly surrounding the rotational axis and located on an inner periphery of a yoke at spaced apart intervals in a circumferential direction around the rotational axis, and a plurality of slots between adjacent teeth and that house the coil. The coil includes a pair of coil ends that respectively protrude in the axial direction from a pair of axial end surfaces of the stator core. The rotor is spaced radially inward of the stator by an air gap and rotatable around the rotational axis. The housing includes a first cooling liquid port, a second cooling liquid port, and a cooling liquid channel to allow a cooling liquid to flow between the first and second cooling liquid ports. The cooling liquid channel includes a first annular channel including a first one of the pair of coil ends therein and surrounding the rotational axis and communicating with the second cooling liquid port, and a second annular channel including a second one of the pair of coil ends inside and surrounding the rotational axis. The cooling liquid channel includes a first communication channel extending between a first end portion located adjacent to but separated from the first annular channel and communicating with the first cooling liquid port and a second end portion that communicates with the second annular channel. The cooling liquid channel includes a second communication channel extending between the first and second annular channels so as to communicate the first annular channel and the second annular channel with each other.

According to this structural arrangement, the housing including the first cooling liquid port and the second cooling liquid port includes the cooling liquid channel to allow a cooling liquid to flow between the first and second cooling liquid ports. Therefore, it is possible to cool the entire electric motor with a simple structure by cooling the housing. Further, in the cooling liquid channel, a cooling liquid is caused to flow from one to the other of the first annular channel and the second annular channel through the second communication channel, such that the pair of coil ends are cooled. Therefore, cooling performance is increased in combination with the cooling of the housing.

In a preferred embodiment, the first communication channel is located farther radially outward than the second communication channel. According to this structural arrangement, the first communication channel and the second communication channel are each laid out freely without causing interference with the other.

In a preferred embodiment, the first communication channel is located farther radially outward than the first annular channel. According to this structural arrangement, a portion that is farther radially outward than the first annular channel in the housing is effectively used to create the first communication channel.

In a preferred embodiment, the first communication channel is provided inside a thickness of a wall of the housing, and the second communication channel is provided between an inner peripheral surface of the housing and an outer peripheral surface of the stator core. According to this structural arrangement, the housing is effectively cooled by a cooling liquid flowing through the first communication channel that is provided inside the wall thickness of the housing. Further, the housing and the stator core are effectively cooled by a cooling liquid flowing through the second communication channel.

In a preferred embodiment, the second communication channel is defined by a groove provided on the outer peripheral surface of the stator core and by the inner peripheral surface of the housing. According to this structural arrangement, the first communication channel and the second communication channel are each provided freely without causing interference with the other. Further, the stator core is effectively cooled by a cooling liquid flowing through the groove provided on the outer peripheral surface of the stator core and defining the second communication channel.

In a preferred embodiment, the cooling liquid channel further includes a first connection channel which communicates the first end portion of the first communication channel with the first cooling liquid port. According to this structural arrangement, the first end portion of the first communication channel communicates with the first cooling liquid port through the first connection channel.

In a preferred embodiment, the cooling liquid channel further includes a second connection channel which communicates the first annular channel with the second cooling liquid port. According to this structural arrangement, the first annular channel communicates with the second cooling liquid port through the second connection channel.

In a preferred embodiment, the first cooling liquid port is a cooling liquid inlet to introduce a cooling liquid into the cooling liquid channel, and the second cooling liquid port is a cooling liquid outlet to discharge a cooling liquid that has flowed through the cooling liquid channel. According to this structural arrangement, the cooling liquid introduced from the cooling liquid inlet (first cooling liquid port) is exhausted from the cooling liquid outlet (second cooling liquid port) after flowing through the cooling liquid channel.

In a preferred embodiment, the stator core is press-fitted or shrink-fitted into the housing. According to this structural arrangement, the temperature expansion of the housing is prevented by cooling the housing. Therefore, a reduction in the holding force with which the housing holds the stator core is prevented despite an increase in temperature. In particular, when a thermal expansion coefficient of the housing is greater than a thermal expansion coefficient of the stator core, this effect prevents a reduction in the holding force.

In a preferred embodiment, the first communication channel includes a plurality of first axial holes which are spaced apart in the circumferential direction and extend in the axial direction. According to this structural arrangement, because the first communication channel includes the plurality of first axial holes spaced apart in the circumferential direction, the cooling effect on the housing is high.

In a preferred embodiment, the housing includes a cylindrical housing main body including an inner peripheral surface to which the stator core is fitted, and a cover housing including an end surface to cover an end surface in the axial direction of the housing main body. The cover housing defines a portion of the first annular channel. The cooling liquid channel further includes a first connection channel which communicates the first end portion of the first communication channel with the first cooling liquid port. The first connection channel includes a circumferential channel that extends in the circumferential direction. The circumferential channel includes a circumferential groove provided on either one of the end surface of the housing main body and the end surface of the cover housing and extends in the circumferential direction and by the other of the end surface of the housing main body and the end surface of the cover housing. The circumferential channel couples first end portions of the plurality of first axial holes as the first end portion of the first communication channel with each other.

According to this structural arrangement, the first cooling liquid port and the first end portions of the plurality of axial holes that are spaced apart in the circumferential direction inside the wall thickness of the housing communicate with each other through the circumferential channel of the first connection channel. The circumferential channel includes the circumferential groove that is provided on either one of the end surface in the axial direction of the cylindrical housing main body and the end surface of the cover housing. Therefore, the structure is simplified, and further, the cooling effect on the housing is increased.

In a preferred embodiment, at least either of intervals in the circumferential direction of the plurality of first axial holes and cross-sectional areas of the plurality of first axial holes are non-uniform. According to this structural arrangement, non-uniformity of the cooling effect depending on the position in the circumferential direction is prevented.

In a preferred embodiment, the circumferential channel includes a pair of circumferential end portions, and the cooling liquid channel further includes a second connection channel which communicates the first annular channel with the second cooling liquid port. The second connection channel includes a second axial hole including a first end separated in the circumferential direction with respect to the pair of circumferential end portions of the circumferential channel, and the second axial hole is provided in the housing main body. According to this structural arrangement, the first axial holes spaced apart in the circumferential direction and the second axial hole as the second connection channel are favorably located.

In a preferred embodiment, the groove includes a plurality of axial grooves spaced apart in the circumferential direction and extend in the axial direction. According to this structural arrangement, the stator core is effectively cooled by a cooling liquid that is caused to flow through the plurality of axial grooves as the second communication channel provided on the outer peripheral surface of the stator core.

In a preferred embodiment, the plurality of axial grooves are located at equal or substantially equal intervals in the circumferential direction and radially outward of the plurality of teeth. According to this structural arrangement, a deterioration in the magnetic properties caused by an axial groove provided on the outer peripheral surface of the stator core is prevented.

In a preferred embodiment, each of the plurality of axial grooves defines an opening that is open in the axial end surface of the stator core. The housing includes a projection which makes contact with the axial end surface of the stator core at a location spaced away from the opening and positions the stator core in the axial direction. According to this structural arrangement, the stator core is positioned in the axial direction by the projection of the housing without blocking the opening of the axial groove in the first axial end surface of the stator core.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a front view of an electric motor according to a preferred embodiment.
FIG. 2 is a side view of the electric motor.
FIG. 3 is a longitudinal cross-sectional view of the electric motor, and corresponds to a cross-sectional view taken along A-O-C in FIG. 1.
FIG. 4 is a longitudinal cross-sectional view of the electric motor, and corresponds to a cross-sectional view taken along B-O-C in FIG. 1.
FIG. 5 is a longitudinal cross-sectional view of the electric motor, and corresponds to a cross-sectional view taken along D-D in FIG. 1.
FIG. 6 is an enlarged transverse cross-sectional view of the electric motor, and corresponds to a partially enlarged view of FIG. 5.
FIG. 7 is a transverse cross-sectional view of the electric motor, and corresponds to a cross-sectional view taken along E-E in FIG. 2.
FIG. 8 is a transverse cross-sectional view of the electric motor, and corresponds to a cross-sectional view taken along F-F in FIG. 2.
FIG. 9 is a transverse cross-sectional view of the electric motor, and corresponds to a view of FIG. 8 from which a coil is removed.
FIG. 10 is a transverse cross-sectional view of the electric motor, and corresponds to a cross-sectional view taken along G-G in FIG. 2.
FIG. 11 is a partially enlarged view of an axial end surface of a stator core.
FIG. 12 is a perspective view of a stator core assembly including the stator core, a plastic portion, and a metal ring.
FIG. 13 is a plan view of the stator core assembly.
FIG. 14 is a side view of the stator core assembly.
FIG. 15A is a longitudinal cross-sectional view of the stator core assembly, and corresponds to a cross-sectional view taken along H-H in FIG. 13.
FIG. 15B is an enlarged cross-sectional view of a main part of the stator core assembly.
FIG. 16 is a transverse cross-sectional view of the stator core assembly, and corresponds to a cross-sectional view taken along I-I in FIG. 14.
FIG. 17 is a schematic view showing a disposition example of a segment coil.
FIG. 18A is a transverse cross-sectional view of a main portion of the stator core, showing a state in which an insulation paper is located in a slot before forming a plastic portion.
FIG. 18B is a transverse cross-sectional view of a main portion of the stator core assembly, and corresponds to a partially enlarged view of FIG. 16, showing a state in which the plastic portion is provided.

### DETAILED DESCRIPTION OF THE PREFERRED EMBODIMENTS

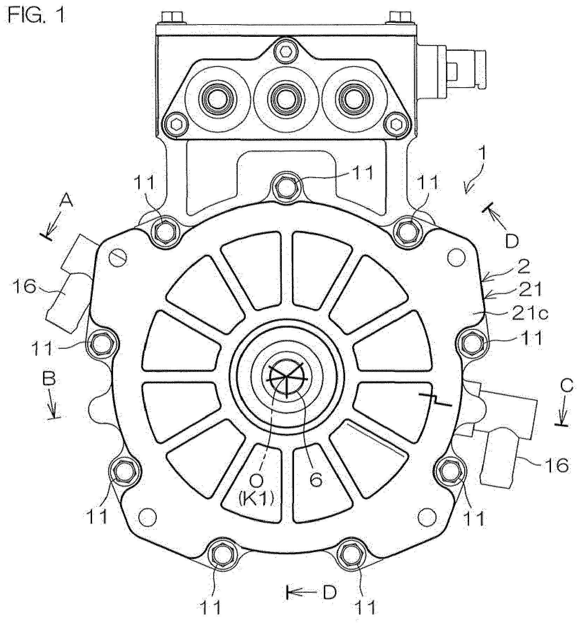

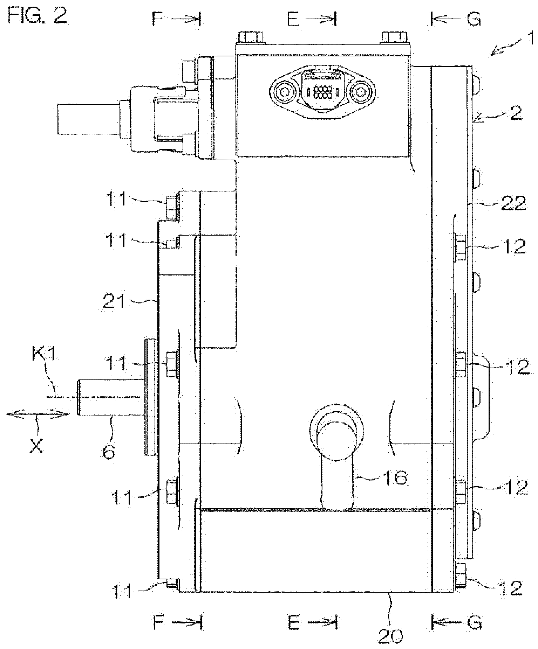

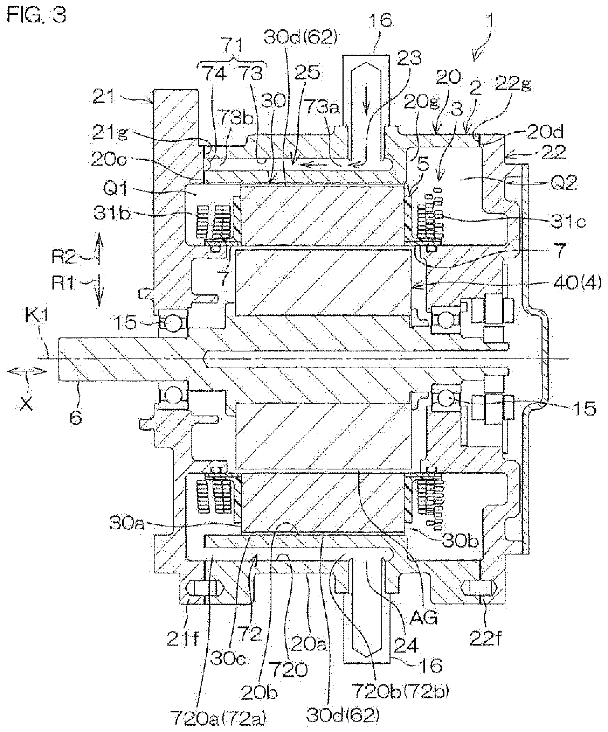

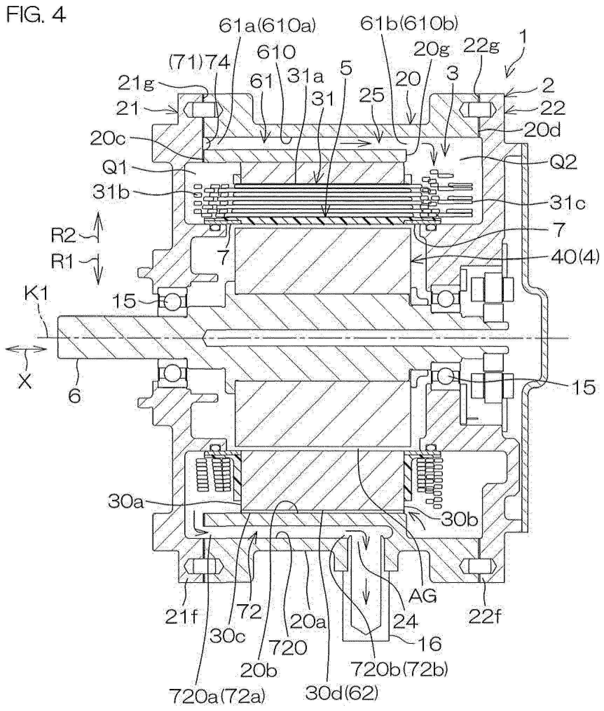

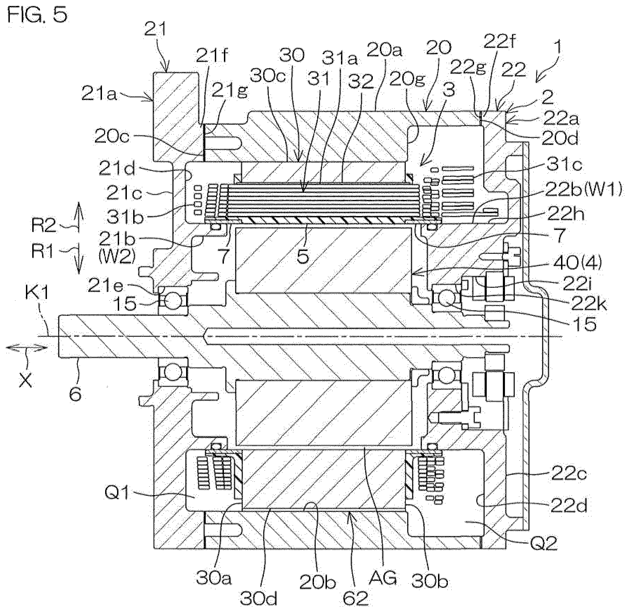

FIG. 1 is a front view of an electric motor 1 according to a preferred embodiment. FIG. 2 is a side view of the electric motor 1. FIG. 3 to FIG. 5 are longitudinal cross-sectional views of the electric motor 1. FIG. 3 corresponds to a cross-sectional view taken along A-O-C in FIG. 1. FIG. 4 corresponds to a cross-sectional view taken along B-O-C in FIG. 1. FIG. 5 corresponds to a cross-sectional view taken along D-D in FIG. 1.

As shown in FIG. 1 to FIG. 3, the electric motor 1 includes a housing 2, a stator 3, a rotor 4, a plastic portion 5, and an output shaft 6. As shown in FIG. 3, the housing 2 houses the stator 3 and the rotor 4. The output shaft 6 extends in an axial direction X that is along a rotational axis K1. The output shaft 6 is supported by the housing 2 so as to be rotatable around the rotational axis K1.

The rotor 4 rotates integrally with the output shaft 6. The rotor 4 is located radially inward R1 of the stator 3 through an air gap AG. The rotor 4 is rotatable around the rotational axis K1. The rotor 4 includes a rotor core 40 and permanent magnets (not shown) attached to the rotor core 40.

The stator 3 includes a stator core 30 and a coil 31. The coil 31 includes a first coil end 31b and a second coil end 31c as a pair of coil ends that protrude on both sides in the axial direction X of the stator core 30.

In the following, a direction that is perpendicular to the rotational axis K1 and is toward the rotational axis K1 is referred to as radially inward R1. On the other hand, a direction that is perpendicular to the rotational axis K1 and is away from the rotational axis K1 is referred to as radially outward R2.

First, description will be provided of the housing 2.

The housing 2 is made of metal. The housing 2 is made of, for example, an aluminum material. As shown in FIG. 2, the housing 2 includes a cylindrical housing main body 20, a first cover housing 21, and a second cover housing 22. Further, as shown in FIG. 3, the housing 2 includes a first cooling liquid port 23, a second cooling liquid port 24, and a cooling liquid channel 25.

As shown in FIG. 3, the housing main body 20 includes an outer peripheral surface 20a, an inner peripheral surface 20b, a first end surface 20c, and a second end surface 20d. The first cover housing 21 is fixed to the first end surface 20c of the housing main body 20 by fixing bolts 11, for example (refer to FIG. 2). The second cover housing 22 is fixed to the second end surface 20d of the housing main body 20 by fixing bolts 12, for example (refer to FIG. 2).

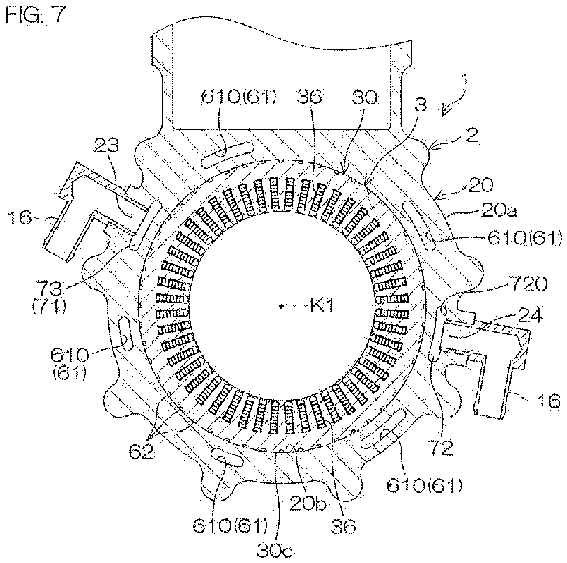

As shown in FIG. 7 being a cross-sectional view taken along E-E in FIG. 2, each of the first cooling liquid port 23 and the second cooling liquid port 24 is defined by an opening hole that is open in the outer peripheral surface 20a of the housing main body 20. Into each of the first cooling liquid port 23 and the second cooling liquid port 24, an L-shaped pipe fitting 16 is screwed therein, for example.

As shown in FIG. 3, the cooling liquid channel 25 is defined by the housing 2 to allow a cooling liquid to flow between the first cooling liquid port 23 and the second cooling liquid port 24. The first cooling liquid port 23 functions as a cooling liquid inlet to introduce the cooling liquid into the cooling liquid channel 25. The second cooling liquid port 24 functions as a cooling liquid outlet to discharge the cooling liquid that has flowed through the cooling liquid channel 25. The cooling liquid channel 25 includes a first annular channel Q1 and a second annular channel Q2, a first communication channel 61 (refer to FIG. 4) and a second communication channel 62 (refer to FIG. 5), and a first connection channel 71 and a second connection channel 72.

The first annular channel Q1 includes the first coil end 31b. The second annular channel Q2 includes the second coil end 31c. The first annular channel Q1 and the second annular channel Q2 are annular channels that have annular shapes surrounding the rotational axis K1. The first annular channel Q1 and the second annular channel Q2 are filled with the cooling liquid.

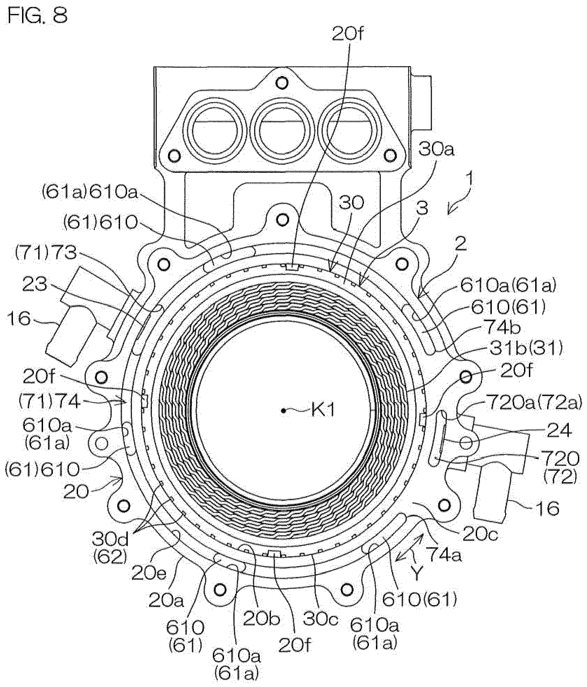

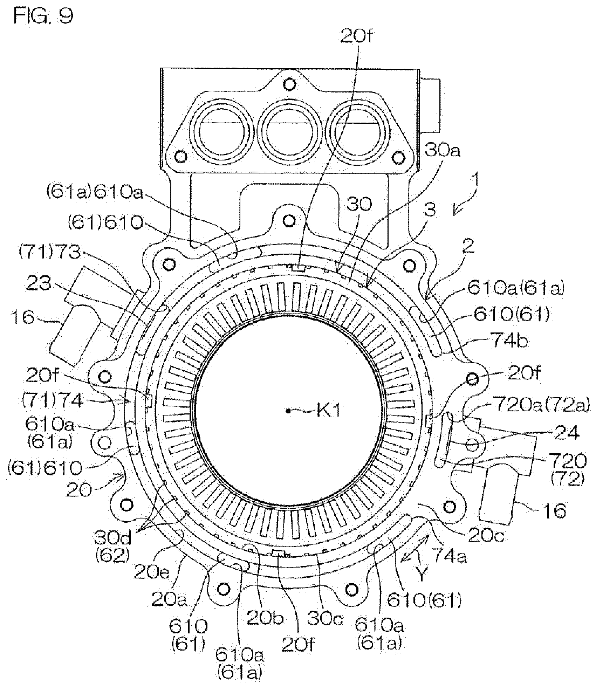

FIG. 8 is a cross-sectional view taken along F-F in FIG. 2, and FIG. 9 corresponds to a view of FIG. 8 from which the coil is removed. As shown in FIG. 3, the first connection channel 71 includes an axial channel 73 and a circumferential channel 74. As shown in FIG. 9, the circumferential channel 74 has ends in a circumferential direction Y. The circumferential channel 74 is provided between a circumferential groove 20e provided on the first end surface 20c of the cylindrical housing main body 20 and an end surface 21g (refer to FIG. 3) of the first cover housing 21. The circumferential groove 20e has ends in the circumferential direction Y. As shown in FIG. 3, the axial channel 73 includes an axial hole that extends in the axial direction X inside the wall thickness of the housing main body 20. The axial channel 73 includes a first end 73a communicating with the first cooling liquid port 23 and a second end 73b communicating with the circumferential channel 74.

As shown in FIG. 4 being a cross-sectional view taken along B-O-C in FIG. 1, the first communication channel 61 includes a first end portion 61a and a second end portion 61b. The first communication channel 61 extends between the first end portion 61a and the second end portion 61b. The first communication channel 61 extends in the axial direction X inside the wall thickness of the housing main body 20.

As shown in FIG. 8, the first communication channel 61 includes a plurality of first axial holes 610 that are spaced apart in the circumferential direction Y around the rotational axis K1 and extend in the axial direction X. The first axial hole 610 includes a first end portion 610a that corresponds to the first end portion 61a of the first communication channel 61 and a second end portion 610b that corresponds to the second end portion 61b of the first communication channel 61.

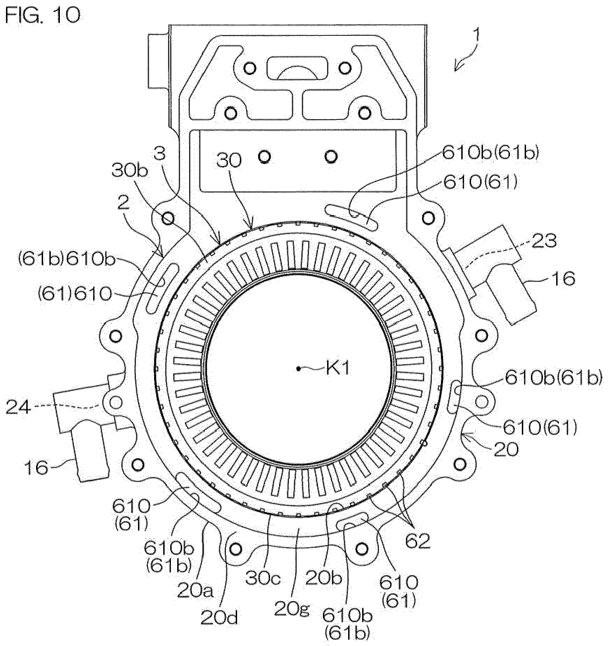

As shown in FIG. 10 being a cross-sectional view taken along G-G in FIG. 2, at least either of intervals of the plurality of first axial holes 610 in the circumferential direction Y and cross-sectional areas of the plurality of first axial holes 610 are non-uniform. In the example of FIG. 10, both of the intervals of the plurality of first axial holes 610 in the circumferential direction Y and the cross-sectional areas of the plurality of first axial holes 610 are non-uniform. Without limitation to this example, either of the intervals and cross-sectional areas may be non-uniform.

As shown in FIG. 4, the first end portion 61a of the first communication channel 61 is located adjacent to the first annular channel Q1 but separated radially outward R2 from the first annular channel Q1. The first communication channel 61 is located farther radially outward R2 than the first annular channel Q1.

The first connection channel 71 communicates the first end portion 61a with the first cooling liquid port 23 (refer to FIG. 3 and FIG. 7). Specifically, as shown in FIG. 8, the first end portion 61a of the first communication channel 61 communicates with the circumferential channel 74 of the first connection channel 71. The circumferential channel 74 couples the first end portions 610a of the plurality of first axial holes 610 (first communication channel 61) with each other.

As shown in FIG. 4, the second end portion 61b of the first communication channel 61 (the second end portion 610b of the first axial hole 610) communicates with the second annular channel Q2. As shown in FIG. 4, the second end portion 61b of the first communication channel 61 is opened in an annular step portion 20g that is provided on the inner peripheral surface 20b of the housing main body 20 and faces the second cover housing 22.

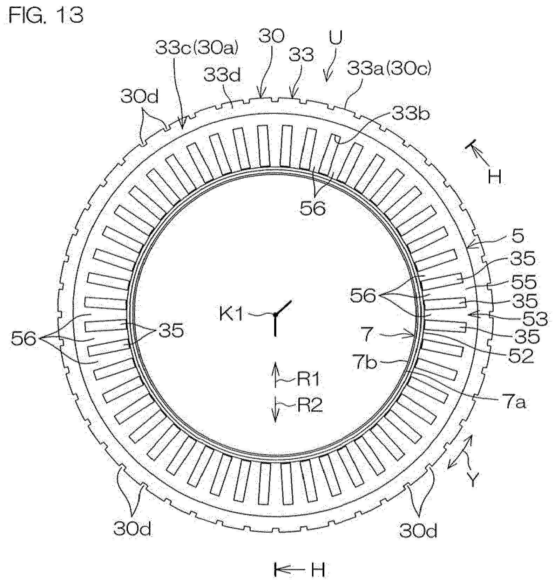

As shown in FIG. 4, the second communication channel 62 extends between the first annular channel Q1 and the second annular channel Q2 so as to communicate the first annular channel Q1 and the second annular channel Q2 with each other. The second communication channel 62 is provided between the inner peripheral surface 20b of the housing main body 20 and an outer peripheral surface 30c of the stator core 30. Specifically, the second communication channel 62 includes a plurality of axial grooves 30d (refer to FIG. 13) that are provided on the outer peripheral surface 30c of the stator core 30 and spaced apart in the circumferential direction Y. The second communication channel 62 includes the plurality of axial grooves 30d and the inner peripheral surface 20b of the housing main body 20. The first communication channel 61 is located farther radially outward R2 than the second communication channel 62.

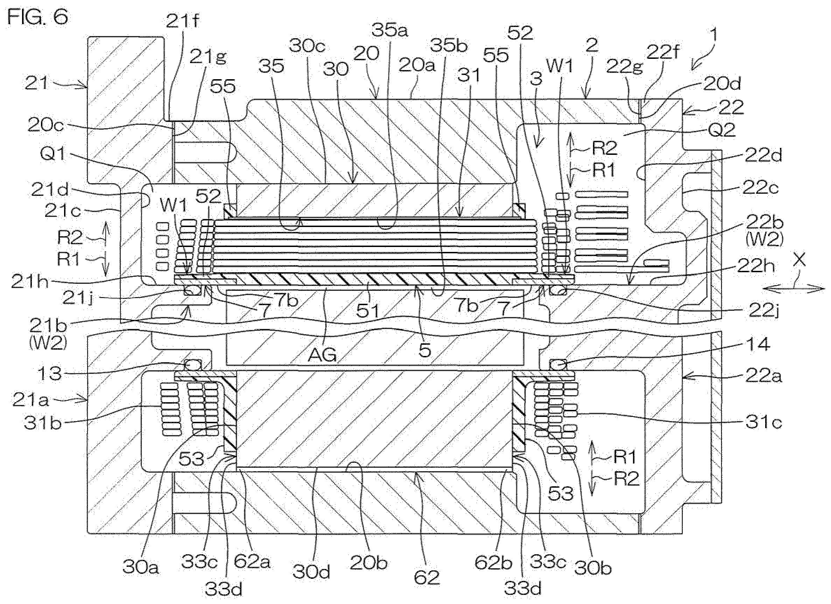

As shown in FIG. 6, which is a partially enlarged view of FIG. 5, the second communication channel 62 includes a first end portion 62a and a second end portion 62b. The first end portion 62a of the second communication channel 62 communicates with the first annular channel Q1. The second end portion 62b of the second communication channel 62 communicates with the second annular channel Q2.

As shown in FIG. 3, the second connection channel 72 communicates the first annular channel Q1 with the second cooling liquid port 24 as the cooling liquid outlet. The second connection channel 72 includes a first end portion 72a and a second end portion 72b. The first end portion 72a of the second connection channel 72 communicates with the first annular channel Q1. The second end portion 72b of the second connection channel 72 communicates with the second cooling liquid port 24. The second connection channel 72 includes a second axial hole 720 that extends in the axial direction X inside the wall thickness of the housing main body 20. The second axial hole 720 includes a first end portion 720a that corresponds to the first end portion 72a of the second connection channel 72 and a second end portion 720b that corresponds to the second end portion 72b of the second connection channel 72.

As shown in FIG. 8 being a cross-sectional view taken along F-F in FIG. 2, the circumferential channel 74 includes a pair of circumferential end portions 74a, 74b. One end (first end portion 72a) of the second connection channel 72 including the second axial hole 720 is spaced apart in the circumferential direction Y with respect to the pair of circumferential end portions 74a, 74b of the circumferential channel 74.

As shown in FIG. 3, the cooling liquid channel 25 causes the cooling liquid having flowed in from the first cooling liquid port 23 as the cooling liquid inlet to flow to the first connection channel 71. As shown in FIG. 4, the cooling liquid channel 25 further causes the cooling liquid to flow from the first connection channel 71, through the first communication channel 61, the second annular channel Q2, the second communication channel 62, the first annular channel Q1, and the second connection channel 72 in order, to the second cooling liquid port 24 (refer to FIG. 7) as the cooling liquid outlet. The first and second coil ends 31b and 31c are thus cooled. Further, the housing 2 and the stator core 30 are cooled.

As shown in FIG. 5, the first cover housing 21 includes a main plate 21a and a cylindrical wall 21b (second cylindrical wall W2). The main plate 21a includes an outer side surface 21c, an inner side surface 21d, a bearing holding hole 21e, and an annular projection 21f.

The annular projection 21f is provided on the inner side surface 21d and has an annular shape centered on the rotational axis K1. An end surface 21g of the annular projection 21f corresponds to the end surface of the first cover housing 21.

The end surface 21g of the first cover housing 21 covers the first end surface 20c of the housing main body 20 through a gasket (not shown). The gasket provides a seal between the first end surface 20c of the housing main body 20 and the end surface 21g of the first cover housing 21. Although not illustrated, in FIG. 8, the gasket surrounds the circumferential groove 20e that defines the circumferential channel 74, and the opening of the first end portion 72a of the second connection channel 72, respectively, so as to prevent the circumferential channel 74 and the second connection channel 72 from communicating with each other.

As shown in FIG. 5, the cylindrical wall 21b extends in the axial direction X from the inner side surface 21d. The cylindrical wall 21b has a cylindrical shape surrounding the rotational axis K1. As shown in FIG. 6, the cylindrical wall 21b includes an outer peripheral surface 21h that includes a cylindrical surface centered on the rotational axis K1 and a housing groove 21j provided on the outer peripheral surface 21h. In the housing groove 21j, a seal member 13 is housed, which is, for example, an O-ring.

As shown in FIG. 5, the second cover housing 22 includes a main plate 22a and a cylindrical wall 22b (second cylindrical wall W2). The main plate 22a includes an outer side surface 22c, an inner side surface 22d, and an annular projection 22f.

The annular projection 22f is provided on the inner side surface 22d of the main plate 22a and has an annular shape surrounding the rotational axis K1. An end surface 22g of the annular projection 22f corresponds to an end surface of the second cover housing 22. The end surface 22g of the second cover housing 22 covers the second end surface 20d of the housing main body 20 through a gasket (not shown). The gasket provides a seal between the second end surface 20d of the housing main body 20 and the end surface 22g of the second cover housing 22.

The cylindrical wall 22b extends in the axial direction X from the inner side surface 22d of the main plate 22a. As shown in FIG. 6, the cylindrical wall 22b has a cylindrical shape surrounding the rotational axis K1. The cylindrical wall 22b includes an outer peripheral surface 22h, an inner peripheral surface 22i, a housing groove 22j, and a bearing holding portion 22k.

The outer peripheral surface 22h of the cylindrical wall 22b includes a cylindrical surface centered on the rotational axis K1. The housing groove 22j extends in the circumferential direction of the outer peripheral surface 22h. In the housing groove 22j, a seal member 14 is housed, which is, for example, an O-ring. The inner peripheral surface 22i of the cylindrical wall 22b includes a cylindrical surface centered on the rotational axis K1. The bearing holding portion 22k is provided in the inner peripheral surface 22i of the cylindrical wall 22b.

As shown in FIG. 5, the output shaft 6 is rotatably supported by the housing 2 through a pair of bearings 15, 15 held by an inner peripheral surface of the bearing holding hole 21e of the first cover housing 21 and the bearing holding portion 22k of the second cover housing 22. The pair of bearings 15, 15 are, for example, sealed bearings. The rotor 4 includes the rotor core 40 that rotates integrally with the output shaft 6 and permanent magnets (not shown) located on the rotor core 40 at equal intervals in the circumferential direction.

Next, description will be provided of the stator 3.

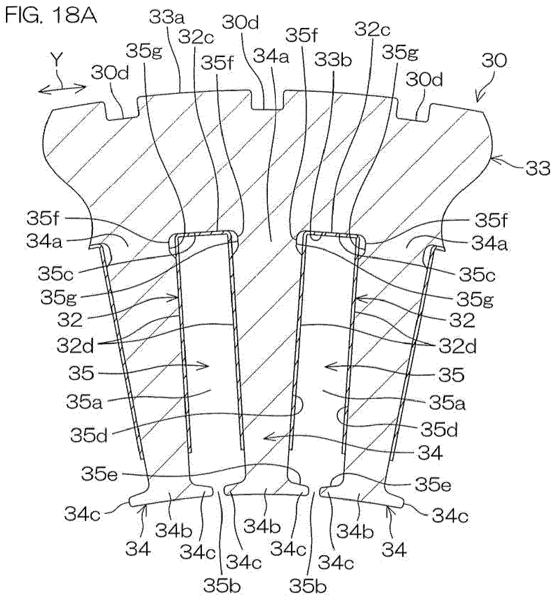

As shown in FIG. 5, the stator 3 includes the stator core 30, the coil 31, and an insulation paper 32 (refer to FIG. 18A as well). The stator core 30 is constructed by laminating a plurality of plate-shaped electromagnetic steel plates. The stator core 30 includes a first axial end surface 30a and a second axial end surface 30b as a pair of axial end surfaces and the outer peripheral surface 30c. The stator core 30 is fitted to the inner peripheral surface 20b of the housing main body 20. The stator core 30 is press-fitted or shrink-fitted into the housing 2 (housing main body 20) in some cases.

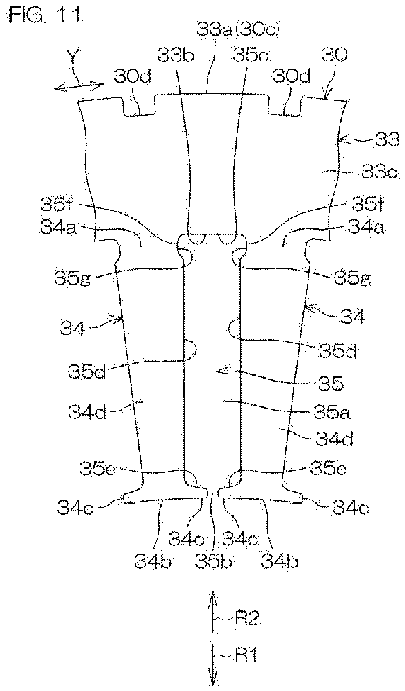

FIG. 11 is an enlarged view of a main portion of the stator core 30. As shown in FIG. 11, the stator core 30 includes a yoke 33, a plurality of teeth 34, and a plurality of slots 35. The yoke 33 has a shaft shape extending in the axial direction X along the rotational axis K1 and an annular shape surrounding the rotational axis K1. The yoke 33 includes an outer periphery 33a, an inner periphery 33b, and a pair of axial end surfaces 33c. The plurality of teeth 34 are located on the inner periphery 33b of the yoke 33 at intervals spaced apart in the circumferential direction Y around the rotational axis K1.

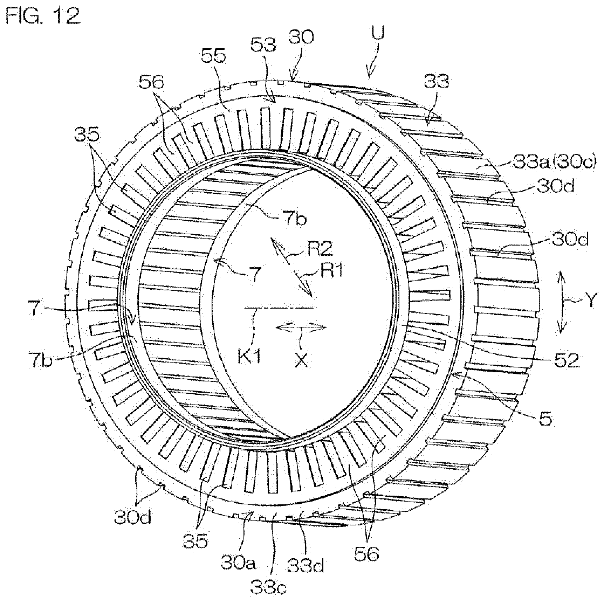

As shown in FIG. 12, the axial grooves 30d defining the second communication channel 62 (refer to FIG. 8) are located on the outer periphery 30c of the stator core 30 (the outer periphery 33a of the yoke 33) at equal or substantially equal intervals in the circumferential direction Y. As shown in FIG. 11, the axial grooves 30d are located radially outward R2 of the teeth 34. Specifically, the axial grooves 30d are located radially outward R2 of central positions in the circumferential direction Y of the teeth 34. The axial grooves 30d may be located radially outward R2 of all of the teeth 34, or may be located radially outward R2 of every two or more teeth 34 in the circumferential direction Y.

As shown in FIG. 8, the housing main body 20 includes a plurality of projections 20f that protrude radially inward R1 from the inner peripheral surface 20b. The plurality of projections 20f are spaced apart in the circumferential direction Y. The projections 20f position the stator core 30 in the axial direction X by making contact with the first axial end surface 30a of the stator core 30. The projections 20f make contact with the first axial end surface 30a at locations to avoid openings of the axial grooves 30d that are opened in the first axial end surface 30a.

The positioning of the stator core 30 in the axial direction X may be performed, in an assembly step, by using jigs (not shown). In that case, it is not necessary to provide the projections 20f.

The plurality of teeth 34 protrude radially inward R1 from the inner periphery 33b of the yoke 33. Each of the teeth 34 includes a base end 34a and a tip end 34b. The base end 34a is coupled with the yoke 33. The tip end 34b is located radially inward R1 relative to the base end 34a. The tip end 34b includes a pair of protrusions 34c that protrude on both sides in the circumferential direction Y.

Between adjacent teeth 34 in the circumferential direction Y, the slots 35 are provided. The teeth 34 and the slots 35 are alternately located in the circumferential direction Y. The slots 35 penetrate the stator core 30 in the axial direction X.

The slot 35 includes a coil housing portion 35a and a slot opening portion 35b. The coil housing portion 35a houses the coil 31. The slot opening portion 35b is provided between the protrusions 34c of adjacent teeth 34. The slot opening portion 35b opens the coil housing portion 35a radially inward R1.

An inner wall surface of the slot 35 includes a bottom wall surface 35c, a pair of side wall surfaces 35d, and a pair of holding wall surfaces 35e. The bottom wall surface 35c is defined by the inner periphery 33b of the yoke 33 and faces radially inward R1. The pair of side wall surfaces 35d are defined by side surfaces of adjacent teeth 34 and oppose each other in the circumferential direction Y. The pair of holding wall surfaces 35e correspond to wall surfaces of the pair of protrusions 34c and are surfaces facing radially outward R2.

A pair of corner portions 35f are defined by the pair of side wall surfaces 35d (wall surfaces of the teeth 34) and the bottom wall surface 35c (the inner periphery 33b of the yoke 33). The slot 35 includes the corner portions 35f. A portion of the side wall surface 35d that defines each of the corner portions 35f includes a curved concave inner surface 35g. Each of the corner portions 35f thus extends in the circumferential direction Y.

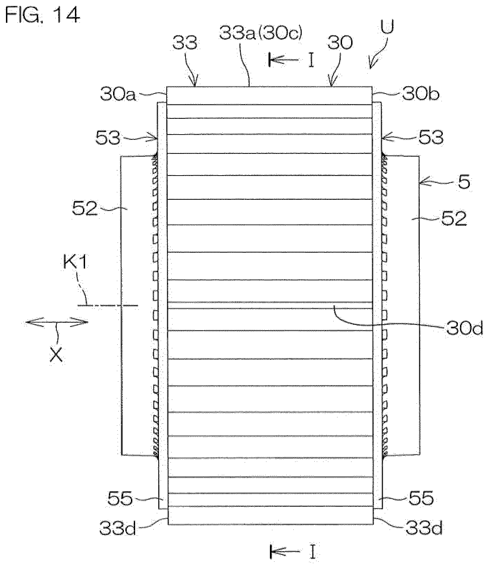

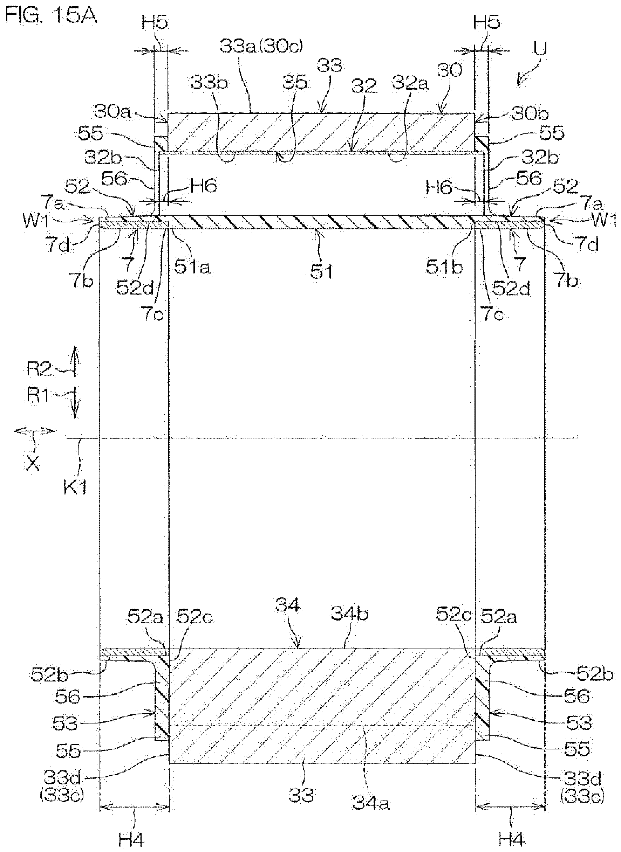

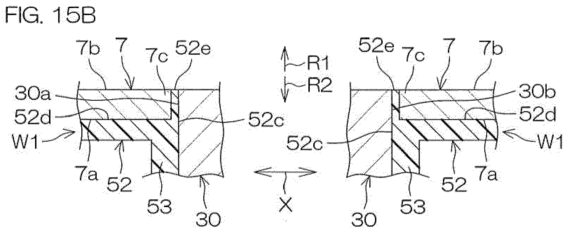

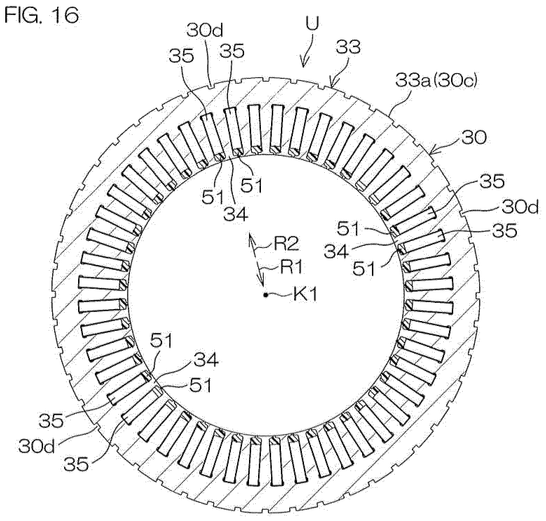

FIG. 12 is a perspective view of a stator core assembly U including the stator core 30. FIG. 13 is a plan view of the stator core assembly U. FIG. 14 is a side view of the stator core assembly U. FIG. 15A is a longitudinal cross-sectional view of the stator core assembly U, and corresponds to a cross-sectional view taken along H-H in FIG. 13. FIG. 15B is an enlarged cross-sectional view of partially enlarged FIG. 15A. FIG. 16 is a cross-sectional view taken along I-I in FIG. 14.

As shown in FIG. 12, FIG. 13, and FIG. 14, the stator core assembly U includes the stator core 30, the plastic portion 5, a metal ring 7, and the insulation paper 32 (refer to FIG. 15A and FIG. 18A). The stator core assembly U is a sub-assembly at a stage before the coil 31 is mounted. That is, at the time of manufacturing, the coil 31 is to be mounted on the stator core assembly U as a sub-assembly.

Next, description will be provided of the coil 31.

As shown in FIG. 5, the coil 31 includes a housed portion 31a and the first coil end 31b and the second coil end 31c as a pair of coil ends. The housed portion 31a is housed in the coil housing portion 35a of the slot 35. The first coil end 31b and the second coil end 31c protrude in the axial direction X from the first axial end surface 30a and the second axial end surface 30b of the stator core 30, respectively.

The coil 31 is mounted on the stator core 30 partially inside the plurality of slots 35. The coil 31 is a 3-phase coil consisting of a U-phase, a V-phase, and a W-phase. Each phase coil is insulated from the stator core 30 through the insulation paper 32 located in the slot 35.

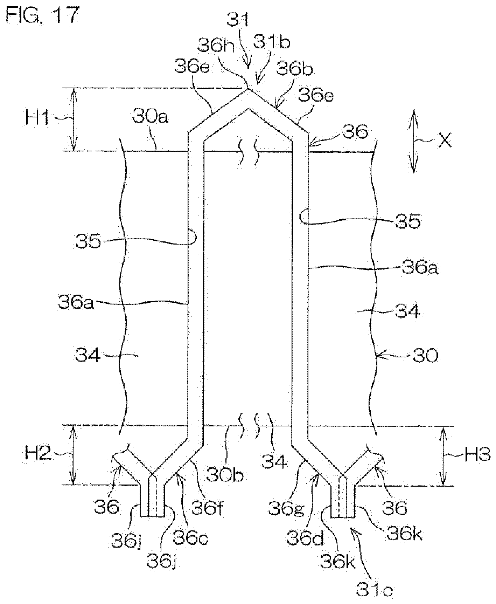

Each phase coil 31 is constructed, for example, by mutually connecting a plurality of segment coils 36 (refer to FIG. 7). FIG. 17 is a schematic view showing a disposition example of the segment coil 36 when the stator core 30 is viewed from a radially inward R1 side. As shown in FIG. 17, the segment coil 36 includes a pair of inserting portions 36a, a bridging portion 36b, and a pair of extended portions 36c, 36d. The pair of inserting portions 36a are inserted into the slots 35 different from each other. The bridging portion 36b couples one ends of the pair of inserting portions 36a with each other. The pair of extended portions 36c, 36d are respectively extended from the other ends of the pair of inserting portions 36a.

The bridging portion 36b is located by extending out from either one of the axial end surfaces (for example, the first axial end surface 30a) of the stator core 30, and provides a portion of the coil end. The pair of extended portions 36c, 36d are located by extending out from the other axial end surface (for example, the second axial end surface 30b) of the stator core 30, and provides a portion of the coil end. Each extended portions 36c, 36d is connected with the extended portions 36c, 36d of another segment coil 36 by welding, etc.

Specifically, in the first coil end 31b, the bridging portion 36b of the segment coil 36 includes a pair of inclined portions 36e that are inclined in mutually opposite directions with respect to the axial direction X as viewed from a radially inward R1 side. An apex portion 36h of the bridging portion 36b is provided at the intersection of the pair of inclined portions 36e.

In the second coil end 31c, the segment coil 36 includes an inclined portion 36f and a joint end portion 36j at one extended portion 36c. The inclined portion 36f is inclined with respect to the axial direction X as viewed from a radially inward R1 side. The joint end portion 36j defines an extended end portion of the one extended portion 36c and extends, for example, in the axial direction X. The joint end portion 36j is joined with the joint end portion 36j of another segment coil 36 by, for example, welding.

Further, in the second coil end 31c, the segment coil 36 includes an inclined portion 36g and a joint end portion 36k at the other extended portion 36d. The inclined portion 36g is inclined with respect to the axial direction X as viewed from a radially inward R1 side. The joint end portion 36k defines an extended end portion of the other extended portion 36d and extends, for example, in the axial direction X. The joint end portion 36k is joined with the joint end portion 36k of another segment coil 36 by, for example, welding.

Here, a maximum protrusion height of the inclined portion 36e of the segment coil 36 from the first axial end surface 30a of the stator core 30 is provided as H1. Further, the maximum protrusion height of the inclined portion 36f of the one extended portion 36c of the segment coil 36 from the second axial end surface 30b of the stator core 30 is provided as H2. Further, a maximum protrusion height of the inclined portion 36g of the other extended portion 36d of the segment coil 36 from the second axial end surface 30b of the stator core 30 is provided as H3.

Next, description will be provided of the insulation paper 32.

As shown in FIG. 15A, the insulation paper 32 is located in the coil housing portion 35a of the slot 35. The insulation paper 32 includes a housed portion 32a and a pair of protruding portions 32b. The housed portion 32a is housed in the coil housing portion 35a of the slot 35. Each of the pair of protruding portions 32b protrudes in the axial direction X from a corresponding axial end surface 30a, 30b of the stator core 30.

As shown in FIG. 18A, the insulation paper 32 is provided, as viewed in the axial direction X, as a groove including a bottom portion 32c and a pair of side portions 32d. The bottom portion 32c of the insulation paper 32 is located along the bottom wall surface 35c. Each of the pair of side portions 32d of the insulation paper 32 is located along a corresponding side wall surface 35d.

However, in place of the insulation paper 32, an insulating plastic layer that is coated on the inner wall surface of the slot 35 may be used, although this is not illustrated.

Next, description will be provided of the plastic portion 5.

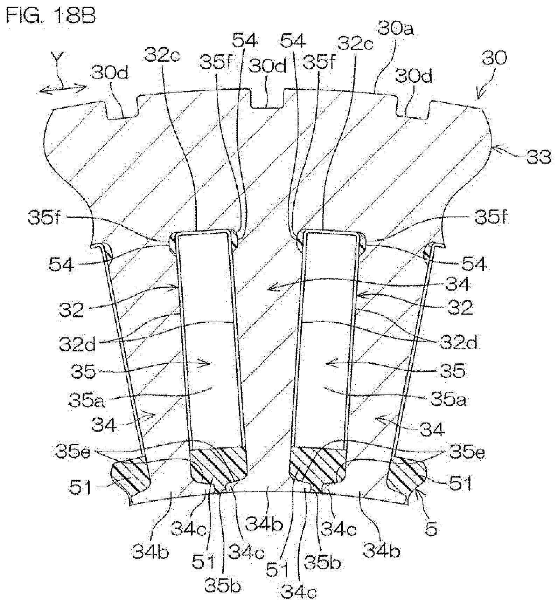

As shown in FIG. 15A, the plastic portion 5 is integral with the stator core 30. The plastic portion 5 includes a plurality of blocking portions 51 (third portions, refer to FIG. 16), a pair of cylindrical walls 52 (second portions), a pair of covering portions 53 (first portions), and a plurality of reinforcing portions 54 (refer to FIG. 18B). Each covering portion 53 includes an annular covering portion 55 and a plurality of arm portions 56.

As shown in FIG. 18B, which is a partially enlarged view of FIG. 16, each blocking portion 51 extends in the axial direction X so as to block the slot opening portion 35b of a corresponding slot 35. Each blocking portion 51 blocks the slot opening portion 35b from the inside of the slot 35, that is, a radially inward R1 side. Each blocking portion 51 blocks the slot opening portion 35b so as not to protrude radially inward R1 from the tip ends 34b of the teeth 34 adjacent to each other in the circumferential direction Y. Each blocking portion 51 includes a first end 51a and a second end 51b in the axial direction X.

The blocking portion 51 is held by apex surfaces of a pair of protrusions 34c in the slot opening portion 35b. A portion of the blocking portion 51 enters the coil housing portion 35a. The blocking portion 51 is held, in the coil housing portion 35a, by the pair of side wall surfaces 35d and the pair of holding wall surfaces 35e of the pair of protrusions 34c. Thus, the blocking portion 51 is firmly held on the stator core 30.

As shown in FIG. 15A, the pair of cylindrical walls 52 are located on both sides in the axial direction X of the stator core 30. The pair of covering portions 53 are located on both sides in the axial direction X of the stator core 30. The pair of cylindrical walls 52 each protrude in the axial direction X from the corresponding one of the first axial end surface 30a and the second axial end surface 30b of the stator core 30. The pair of cylindrical walls 52 are concentric with the stator core 30. Each cylindrical wall 52 includes a first end 52a in the axial direction X and a second end 52b in the axial direction X. The first end 52a of each cylindrical wall 52 includes a contact portion 52c that makes contact with a corresponding axial end surface (the first axial end surface 30a or the second axial end surface 30b) of the stator core 30.

The pair of cylindrical walls 52 are coupled with the plurality of blocking portions 51. One cylindrical wall 52 is coupled with the first ends 51a of the plurality of blocking portions 51. The other cylindrical wall 52 is coupled with the second ends 51b of the plurality of blocking portions 51. That is, the plurality of blocking portions 51 couple the pair of cylindrical walls 52 with each other.

Next, description will be provided of the metal ring 7.

As shown in FIG. 15A, the metal ring 7 is held on an inner peripheral surface 52d of each of the pair of cylindrical walls 52. A pair of the metal rings 7 are located on both sides in the axial direction X of the stator core 30. The metal rings are made of, for example, stainless steel. The metal ring 7 includes an outer peripheral surface 7a, an inner peripheral surface 7b, a one end portion 7c, and the other end portion 7d.

At least a portion of the outer peripheral surface 7a of the metal ring 7 is covered by and molded to the cylindrical wall 52 of the plastic portion 5. The metal ring 7 is held by the plastic portion 5. The metal ring 7 is integrated with the cylindrical wall 52 and held on the stator core 30. First cylindrical walls W1 each including the cylindrical wall 52 and the metal ring 7 that are mutually integrated are provided as a pair. The pair of first cylindrical walls W1 are concentric with the stator core 30. The cylindrical wall 52 of the plastic portion 5 defines a portion of the first cylindrical wall W1.

The one end portion 7c of the metal ring 7 opposes the axial end surface 30a, 30b of the stator core 30 in the axial direction X. The one end portion 7c of the metal ring 7 is separated from the axial end surface 30a, 30b of the stator core 30.

Specifically, as shown in FIG. 15B, the first end 52a of the cylindrical wall 52 includes an interposing portion 52e that is interposed between the first end portion 7c of the metal ring 7 and the axial end surface 30a, 30b of the stator core 30. The plastic portion 5 includes the interposing portion 52e. The interposing portion 52e defines a portion of the first cylindrical wall W1. The contact portion 52c is provided in the interposing portion 52e. The interposing portion 52e includes the contact portion 52c. The interposing portion 52e may be provided over the entire periphery in the circumferential direction Y, or may be provided on a portion of the circumferential direction Y.

Further, as shown in FIG. 6, in terms of a protrusion height in the axial direction X from a corresponding axial end surface 30a, 30b of the stator core 30, a maximum protrusion height of the coil end 31b, 31c is higher than a maximum protrusion height of the metal ring 7.

Specifically, as shown in FIG. 17, in terms of the protrusion height in the axial direction X from the first axial end surface 30a of the stator core 30, a maximum protrusion height H1 of the inclined portions 36e of the segment coil 36 (maximum protrusion height of the apex portion 36h of the bridging portion 36b) corresponds to a maximum protrusion height of the coil end 31b. The maximum protrusion height of the first coil end 31b (maximum protrusion height H1 of the inclined portions 36e) is higher than a maximum protrusion height H4 (refer to FIG. 15A) of the metal ring 7.

Further, in terms of the protrusion height in the axial direction X from the second axial end surface 30b of the stator core 30, a maximum protrusion height of the second coil end 31c corresponds to a higher one of a maximum protrusion height of the joint end portion 36j and a maximum protrusion height of the joint end portion 36k of the segment coil 36 (in a case of mutually equal heights, both thereof). The maximum protrusion height of the second coil end 31c is higher than the maximum protrusion height H4 of the metal ring 7.

Further, in terms of the protrusion height in the axial direction X from the second axial end surface 30b of the stator core 30, the maximum protrusion height H2 of the inclined portion 36f and the maximum protrusion height H3 of the inclined portion 36g of the segment coil 36 are higher than the maximum protrusion height H4 of the metal ring 7.

Further, in terms of the protrusion height in the axial direction X from the second axial end surface 30b of the stator core 30, each joint end portion 36j, 36k of the segment coil 36 is higher than the maximum protrusion height H4 of the metal ring 7.

As shown in FIG. 6, into one first cylindrical wall W1, the cylindrical wall 21b (second cylindrical wall W2) of the first cover housing 21 is insertion-fitted. The one first cylindrical wall W1 is fitted to the outer peripheral surface 21h of the cylindrical wall 21b of the first cover housing 21. Specifically, the inner peripheral surface 7b of the metal ring 7 of the one first cylindrical wall W1 is fitted to the outer peripheral surface 21h of the cylindrical wall 21b (second cylindrical wall W2) of the first cover housing 21.

The seal member 13 housed in the housing groove 21j on the outer peripheral surface 21h of the cylindrical wall 21b (second cylindrical wall W2) of the first cover housing 21 provides a seal between the inner peripheral surface 7b of the metal ring 7 of the one first cylindrical wall W1 and the outer peripheral surface 21h of the cylindrical wall 21b (second cylindrical wall W2).

Into the other first cylindrical wall W1, the cylindrical wall 22b (second cylindrical wall W2) of the second cover housing 22 is insertion-fitted. The other first cylindrical wall W1 is fitted to the outer peripheral surface 22h of the cylindrical wall 22b of the second cover housing 22. Specifically, the inner peripheral surface 7b of the metal ring 7 of the other first cylindrical wall W1 is fitted to the outer peripheral surface 22h of the cylindrical wall 22b (second cylindrical wall W2) of the second cover housing 22.

The seal member 14 housed in the housing groove 22j on the outer peripheral surface 22h of the cylindrical wall 22b (second cylindrical wall W2) of the second cover housing 22 provides a seal between the inner peripheral surface 7b of the metal ring 7 of the other first cylindrical wall W1 and the outer peripheral surface 22h of the cylindrical wall 22b (second cylindrical wall W2).

The housing 2 defines the first annular channel Q1 and the second annular channel Q2 at a radially outward R2 side of the first cylindrical wall W1 and the second cylindrical wall W2 that are mutually fitted. The cooling liquid to cool the first and second coil ends 31b and 31c is caused to flow through the first annular channel Q1 and the second annular channel Q2.

As shown in FIG. 15A, the pair of covering portions 53 are coupled with the corresponding one of the cylindrical walls 52 and respectively cover the pair of axial end surfaces (the first axial end surface 30a and the second axial end surface 30b) of the stator core 30. As shown in FIG. 12, the annular covering portion 55 included in the covering portion 53 covers the axial end surface 33c of the yoke 33. The plurality of arm portions 56 extend along axial end surfaces 34d (refer to FIG. 11) of the teeth 34. As shown in FIG. 15A, the plurality of arm portions 56 included in the covering portion 53 couple the first end 52a as an axial end portion of the cylindrical wall 52 with the annular covering portion 55.

The annular covering portion 55 covers a portion of the axial end surface 33c of the yoke 33. As shown in FIG. 6, the axial end surface 33c of the yoke 33 includes an exposed portion 33d that is exposed to the first annular channel Q1 and the second annular channel Q2. The exposed portion 33d is located radially outward R2 of the annular covering portion 55. The exposed portion 33d is exposed to the first annular channel Q1 and the second annular channel Q2 at the radially outward R2 side of the annular covering portion 55.

As shown in FIG. 15A, the protruding portions 32b of the insulation paper 32 are held by the covering portion 53. Specifically, the protruding portions 32b of the insulation paper 32 are held by the annular covering portion 55. Further, in terms of a protrusion height in the axial direction X from the axial end surface 30a, 30b of the stator core 30, a maximum protrusion height H5 of the annular covering portion 55, which corresponds to a maximum protrusion height of the covering portion 53, is higher than a maximum protrusion height H6 of the protruding portion 32b.

As shown in FIG. 18B, the reinforcing portions 54 are located as a pair for each of the slots 35. The reinforcing portions 54 extend along the respective corner portions 35f of the slot 35 in the axial direction X (direction perpendicular to the page plane in FIG. 18B), and are coupled with the arm portions 56 of the covering portions 53. The reinforcing portions 54 couple the arm portions 56 of the pair of covering portions 53 with each other.

When the insulation paper 32 is inserted into the slot 35, as shown in FIG. 18B, the reinforcing portions 54 extend in the axial direction X so as to block between the curved concave inner surface 35g of the corner portion 35f and a corresponding side portion 32d of the insulation paper 32.

According to a preferred embodiment, as shown in FIG. 4, the housing 2 including the first cooling liquid port 23 and the second cooling liquid port 24 includes the cooling liquid channel 25 to allow a cooling liquid to flow between the cooling liquid ports 23 and 24. Therefore, it is possible to cool the entire electric motor 1 with a simple structure by cooling the housing 2. Further, in the cooling liquid channel 25, the cooling liquid is caused to flow from one to the other of the first annular channel Q1 and the second annular channel Q2 through the second communication channel 62, such that the pair of coil ends 31b, 31c are cooled. Therefore, cooling performance is increased in combination with the cooling of the housing 2.

Further, as shown in FIG. 8, the first communication channel 61 is located farther radially outward R2 than the second communication channel 62. Therefore, the first communication channel 61 and the second communication channel 62 are each laid out freely without causing interference with the other.

Further, as shown in FIG. 4, the first communication channel 61 is located farther radially outward R2 than the first annular channel Q1. Therefore, a portion that is located farther radially outward R2 than the first annular channel Q1 in the housing 2 is effectively used to form the first communication channel 61.

Further, as shown in FIG. 4, the first communication channel 61 is provided inside the wall thickness of the housing 2. Therefore, the housing 2 is effectively cooled by a cooling liquid flowing through the first communication channel 61. Further, as shown in FIG. 6, the second communication channel 62 is provided between the inner peripheral surface (inner peripheral surface 20b of the housing main body 20) of the housing 2 and the outer peripheral surface 30c of the stator core 30. Therefore, the housing 2 and the stator core 30 are effectively cooled by a cooling liquid flowing through the second communication channel 62.

Further, the second communication channel 62 is defined by the groove (axial groove 30d) provided on the outer peripheral surface 30c of the stator core 30 and by the inner peripheral surface (inner peripheral surface 20b of the housing main body 20) of the housing 2. Therefore, the first communication channel 61 and the second communication channel 62 are each provided freely without causing interference with the other. Further, the stator core 30 is effectively cooled by a cooling liquid flowing through the axial groove 30d that is provided on the outer peripheral surface 30c of the stator core 30 and defines the second communication channel 62.

Further, as shown in FIG. 3, the cooling liquid channel 25 includes the first connection channel 71 that communicates the first end portion 61a of the first communication channel 61 with the first cooling liquid port 23. The first end portion 61a of the first communication channel 61 thus communicates with the first cooling liquid port 23 through the first connection channel 71.

Further, the cooling liquid channel 25 includes the second connection channel 72 that communicates the first annular channel Q1 with the second cooling liquid port 24. The first annular channel Q1 thus communicates with the second cooling liquid port 24 through the second connection channel 72.

Further, the first cooling liquid port 23 is a cooling liquid inlet to introduce a cooling liquid into the cooling liquid channel 25, and the second cooling liquid port 24 is a cooling liquid outlet to discharge a cooling liquid that has flowed through the cooling liquid channel 25. The cooling liquid introduced from the cooling liquid inlet (first cooling liquid port 23) is exhausted from the cooling liquid outlet (second cooling liquid port 24) after flowing through the cooling liquid channel 25.

Further, the stator core 30 is press-fitted or shrink-fitted into the housing 2. In a preferred embodiment, temperature expansion of the housing 2 is prevented by cooling the housing 2. Therefore, a reduction in holding force with which the housing 2 holds the stator core 30 is prevented despite an increase in temperature. In particular, when a thermal expansion coefficient of the housing 2 is greater than a thermal expansion coefficient of the stator core 30, a reduction in holding force is prevented.

Further, as shown in FIG. 8, the first communication channel 61 includes the plurality of first axial holes 610 that are spaced apart in the circumferential direction Y and extend in the axial direction X. Therefore, the cooling effect on the housing 2 is high.

Further, as shown in FIG. 8, the first cooling liquid port 23 and the first end portions 610a of the plurality of first axial holes 610 (the first end portion 61a of the first communication channel 61) that are spaced apart in the circumferential direction Y inside the wall thickness of the housing 2 communicate with each other through the circumferential channel 74 of the first connection channel 71. The circumferential channel 74 includes the circumferential groove 20e that is provided on the first end surface 20c (axial end surface) of the cylindrical housing main body 20. Therefore, the structure is simplified. Further, the cooling effect on the housing 2 is increased.

Further, as shown in FIG. 7, at least either of the intervals in the circumferential direction Y of the plurality of first axial holes 610 and the cross-sectional areas of the plurality of first axial holes 610 are non-uniform. Non-uniformity of the cooling effect of the housing 2 depending on the position in the circumferential direction Y is prevented.

Further, the circumferential channel 74 includes the pair of circumferential end portions 74a, 74b. The cooling liquid channel 25 includes the second connection channel 72 that communicates the first annular channel Q1 with the second cooling liquid port 24. The second connection channel 72 includes the second axial hole 720 provided in the housing main body 20. The second axial hole 720 as the second connection channel 72 has a first end (first end portion 720a) which is separated in the circumferential direction Y with respect to the pair of circumferential end portions 74a, 74b of the circumferential channel 74. According to this arrangement, the first axial holes 610 as the first communication channel 61 that are spaced apart in the circumferential direction Y and the second axial hole 720 as the second connection channel 72 are favorably located.

Further, the second communication channel 62 includes the plurality of axial grooves 30d provided on the outer peripheral surface 30c of the stator core 30, spaced apart in the circumferential direction Y, and extend in the axial direction X. Therefore, the stator core 30 is effectively cooled by a cooling liquid that is caused to flow through the plurality of axial grooves 30d (second communication channel 62) provided on the outer peripheral surface 30c of the stator core 30.

Further, as shown in FIG. 11, the plurality of axial grooves 30d are located on the outer peripheral surface 30c of the stator core 30 at equal or substantially intervals in the circumferential direction Y and radially outward R2 of the corresponding teeth 34 respectively. Therefore, a deterioration in the magnetic properties caused by a groove on the outer peripheral surface 30c of the stator core 30 is prevented.

Further, as shown in FIG. 4, each of the plurality of axial grooves 30d defines an opening that is open in the first axial end surface 30a or the second axial end surface 30b of the stator core 30. As shown in FIG. 8, the projection 20f provided on the housing 2 makes contact with the axial end surface 30a of the stator core 30 at a location to avoid the opening and positions the stator core 30 in the axial direction X. Therefore, the stator core 30 is positioned in the axial direction X by the projection 20f of the housing 2 without blocking the opening of the axial groove 30d in the first axial end surface 30a of the stator core 30.

According to an alternative embodiment, the first cooling liquid port 23 may be a cooling liquid outlet, and the second cooling liquid port 24 may be a cooling liquid inlet. Further, the housing 2 and the stator core 30 may be made of metallic materials that have mutually equal thermal expansion coefficients. Further, the housing 2 and the stator core 30 may be fitted by loose fitting. Further, although not illustrated, a circumferential groove to define the circumferential channel 74 of the first connection channel 71 may be provided on the end surface 21g of the first cover housing 21.

Further, a groove (for example, an axial groove) to define the second communication channel 62 may be provided on the inner peripheral surface 20b of the housing main body 20 instead of being provided on the outer peripheral surface 30c of the stator core 30. Further, both of the intervals in the circumferential direction Y of the plurality of first axial holes 610 and the cross-sectional areas of the plurality of first axial holes 610 may be uniform.

## Claims

1. An electric motor (1) comprising:
a stator (3) including a stator core (30) and a coil (31), the stator core (30) including a plurality of teeth (34) extending in an axial direction (X) along a rotational axis (K1) and annularly surrounding the rotational axis (K1) and located on an inner periphery of a yoke at spaced apart intervals in a circumferential direction (Y) around the rotational axis (K1), and a plurality of slots (35) between adjacent teeth (34) and that house the coil (31), the coil (31) including a pair of coil ends (31b, 31c) that respectively protrude in the axial direction (X) from a pair of axial end surfaces (30a, 30b) of the stator core (30);
a rotor (4) spaced radially inward (R1) of the stator (3) by an air gap (AG) and rotatable around the rotational axis (K1); and
a cylindrical housing (2) to house the stator (3) and the rotor (4) and including a first cooling liquid port (23), a second cooling liquid port (24), and a cooling liquid channel (25) configured to allow a cooling liquid to flow between the first and second cooling liquid ports (23 and 24); wherein
the cooling liquid channel (25) includes:
a first annular channel (Q1) including a first one of the pair of coil ends (31b, 31c) therein and surrounding the rotational axis (K1) and communicating with the second cooling liquid port (24);
a second annular channel (Q2) including a second one of the pair of coil ends (31b, 31c) therein and surrounding the rotational axis (K1);
a first communication channel (61) extending between a first end portion (61a) located adjacent to but separated from the first annular channel (Q1) and communicating with the first cooling liquid port (23) and a second end portion (61b) that communicates with the second annular channel (Q2); and
a second communication channel (62) extending between the first and second annular channels (Q1 and Q2) so as to communicate the first annular channel (Q1) and the second annular channel (Q2) with each other.

2. The electric motor (1) according to Claim 1, wherein the first communication channel (61) is located farther radially outward (R2) than the second communication channel (62).

3. The electric motor (1) according to Claim 1 or 2, wherein the first communication channel (61) is located farther radially outward (R2) than the first annular channel (Q1).

4. The electric motor (1) according to any one of Claims 1 to 3, wherein the first communication channel (61) is provided inside a thickness of a wall of the housing (2); and
the second communication channel (62) is provided between an inner peripheral surface (20b) of the housing (2) and an outer peripheral surface (30c) of the stator core (30).

5. The electric motor (1) according to Claim 4, wherein the second communication channel (62) is defined by a groove (30d) on the outer peripheral surface (30c) of the stator core (30) and the inner peripheral surface (20b) of the housing (2).

6. The electric motor (1) according to any one of claims 1 to 5, wherein the cooling liquid channel (25) further includes a first connection channel (71) communicating the first end portion (61a) of the first communication channel (61) with the first cooling liquid port (23).

7. The electric motor (1) according to any one of Claims 1 to 6, wherein the cooling liquid channel (25) further includes a second connection channel (72) communicating the first annular channel (Q1) with the second cooling liquid port (24).

8. The electric motor (1) according to any one of Claims 1 to 7, wherein the first cooling liquid port (23) is a cooling liquid inlet configured to introduce a cooling liquid into the cooling liquid channel (25); and
the second cooling liquid port (24) is a cooling liquid outlet configured to discharge a cooling liquid that has flowed through the cooling liquid channel (25).

9. The electric motor (1) according to any one of Claims 1 to 8, wherein the stator core (30) is press-fitted or shrink-fitted into the housing (2).

10. The electric motor (1) according to Claim 4, wherein the first communication channel (61) includes a plurality of first axial holes (610) spaced apart in the circumferential direction (Y) and extending in the axial direction (X).

11. The electric motor (1) according to Claim 10, wherein the housing (2) includes a cylindrical housing main body (20) including an inner peripheral surface (20b) to which the stator core (30) is fitted, and a cover housing (21) including an end surface (21g) to cover an end surface (20c) of the housing main body (20) in the axial direction (X), the cover housing (21) defining a portion of the first annular channel (Q1);
the cooling liquid channel (25) further includes a first connection channel (71) which communicates the first end portion (61a) of the first communication channel (61) with the first cooling liquid port (23);
the first connection channel (71) includes a circumferential channel (74) including a circumferential groove (20e) provided on either one of the end surface (20c) of the housing main body (20) and the end surface (21g) of the cover housing (21) and extending in the circumferential direction (Y) and by another of the end surface (20c) of the housing main body (20) and the end surface (21g) of the cover housing (21), and extends in the circumferential direction (Y); and
the circumferential channel (74) couples first end portions (610a) of the plurality of first axial holes (610) as the first end portion (61a) of the first communication channel (61) with each other.

12. The electric motor (1) according to Claim 10 or 11, wherein at least either intervals in the circumferential direction (Y) of the plurality of first axial holes (610) and cross-sectional areas of the plurality of first axial holes (610) are non-uniform.

13. The electric motor (1) according to Claim 11, wherein the circumferential channel (74) includes a pair of circumferential end portions (74a, 74b);
the cooling liquid channel (25) further includes a second connection channel (72) which communicates the first annular channel (Q1) with the second cooling liquid port (24); and
the second connection channel (72) includes a second axial hole (720) including a first end (720a) separated in the circumferential direction (Y) with respect to the pair of circumferential end portions (74a, 74b) of the circumferential channel (74), and the second axial hole (720) is provided in the housing main body (20).

14. The electric motor (1) according to Claim 5, wherein the groove (30d) includes a plurality of axial grooves (30d) spaced apart in the circumferential direction (Y) and extending in the axial direction (X).

15. The electric motor (1) according to Claim 14, wherein the plurality of axial grooves (30d) are spaced apart at equal or substantially equal intervals in the circumferential direction (Y) and located radially outward (R2) of the plurality of teeth (34).

16. The electric motor (1) according to Claim 14 or 15, wherein each of the plurality of axial grooves (30d) defines an opening in the axial end surface (30a, 30b) of the stator core (30); and
the housing (2) includes a projection (20f) in contact with the axial end surface (30a, 30b) of the stator core (30), and spaced apart from the opening, to position the stator core (30) in the axial direction (X).
